(19) Europäisches Patentamt
European Patent Office
Office européen des brevets

(11) **EP 3 872 975 A1**

(12) **EUROPEAN PATENT APPLICATION**

(43) Date of publication:
**01.09.2021 Bulletin 2021/35**

(51) Int Cl.:
**H02M 7/483** (2007.01) **H02M 7/487** (2007.01)
**H02M 1/32** (2007.01) **H02M 1/36** (2007.01)
**H02M 1/00** (2006.01)

(21) Application number: **20159794.5**

(22) Date of filing: **27.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ABB Schweiz AG**
**5400 Baden (CH)**

(72) Inventors:
• **Park, Ki-Bum**
  **5405 Baden-Dättwil (CH)**
• **Schweizer, Mario**
  **5406 Rütihof (CH)**
• **Pettersson, Sami**
  **5405 Baden-Dättwil (CH)**

(74) Representative: **Kolster Oy Ab**
**Salmisaarenaukio 1**
**P.O. Box 204**
**00181 Helsinki (FI)**

(54) **FLYING CAPACITOR MULTILEVEL CONVERTER**

(57) A flying capacitor multilevel converter having active neutral-point-clamped topology with an output LCL-filter, wherein the converter comprises an overcurrent mode controller. The overcurrent mode controller is adapted to receive a converter current reference and measured converter current, to form an overcurrent band having an upper and a lower value, the upper value being higher than the converter current reference and the lower value being lower than the converter current reference, and to block gate control signals when the measured converter current is positive and higher than the upper value or when the measured converter current is negative and lower than the lower value.

FIG 5

EP 3 872 975 A1

**Description**

FIELD OF THE INVENTION

The invention relates to multilevel converters, and particularly to flying capacitor multilevel converters.

BACKGROUND OF THE INVENTION

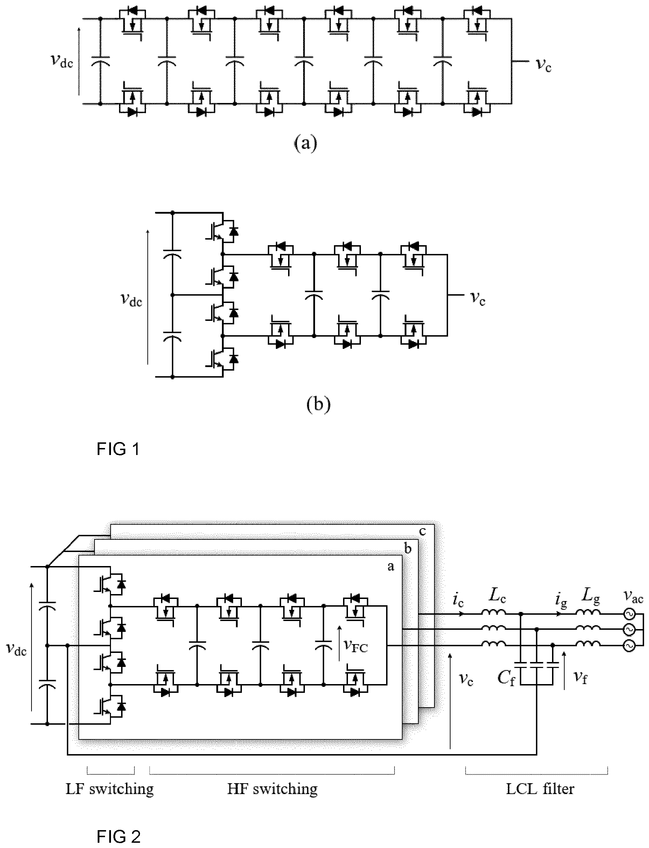

Recently, it has been shown that a flying capacitor multilevel converter shown in Figure 1(a) can bring significant power density improvement for low-voltage grid-connected applications (< 1-kV line-to-line), where low-voltage Si MOSFETs or GaN-based devices can be used. The current ripple of FCMC can be expressed in (1), where $v_{dc}$ is the dc-link voltage, N is the number of voltage level, $f_{sw}$ is the switching frequency, and $L_c$ is the converter-side inductance. It should be noted that the filter inductance can be quadratically reduced to keep the same current ripple as N increases at the cost of increased complexity, i.e., additional flying capacitors and switches.

$$i_{Lc,pp} = \frac{v_{dc}}{4(N-1)^2 f_{sw} L_c} \tag{1}$$

To reduce the complexity of the system, the FCMC can be combined with the active neutral-point-clamped (ANPC) topology, known as ANPC-FCMC, as shown in Figure 1(b). By adding four low frequency (LF) switches, the number of high frequency (HF) FC switch is reduced by half to realize the same multilevel operation.

Figure 2 shows the basic structure of a three-phase grid-tied converter based on 9-level ANPC-FCMC with an LCL filter and a virtual ground connection. The virtual ground, formed of the split input DC voltage, is effective in reducing common-mode noise and for natural balancing of the flying capacitor voltages as well. Different numbers of levels are possible by removing or adding switching cells and flying capacitors.

As installation of renewables increases fast, low voltage ride through of the grid-tied converter is becoming more important due to its capability to improve grid safety and reliability. Numerous research have been conducted for control of grid-tied converter during grid fault conditions. However, transient behaviour of the converter at the beginning of the fault have rarely been studied, which is mainly affected by the LCL filter parameters and the current controller design. Particularly, the peak current of the converter-side current $i_c$ is critical since it causes additional stress to the semiconductors. In addition, the converter-side inductor $L_c$ needs to be designed not to saturate with the worst-case peak current.

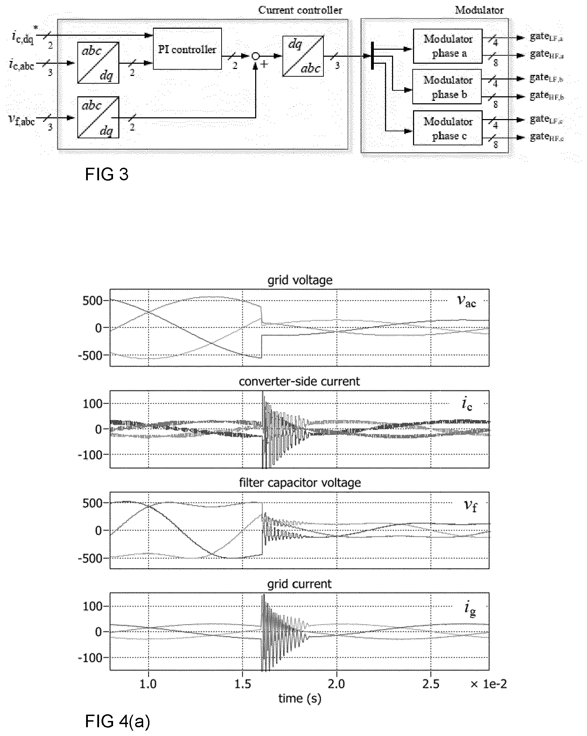

Figure 3 shows the current controller diagram. The converter-side current $i_c$ is controlled. The current controller could be running e.g. in synchronous dq-frame with a conventional PI controller. However, also other control schemes are possible, e.g. control in stationary frame with resonant controllers. Feedfor-ward of the LCL filter capacitor voltage, $v_f$, is used for active damping. The controller receives converter current reference value, measured converter current and measured filter capacitor voltages as inputs. The output from the current controller is fed to a modulators which produce gate control signals for each phase and for each controllable switch component.

Although volume and weight of the LCL filter can be significantly reduced by ANPC-FCMC, it becomes more challenging to control the converter-side current because of very small impedance of the LCL filter. Figure 4(a) shows the transient operation of ANPC-FCMC with specifications given in Table I and the current controller shown in Figure 3. Here, a symmetric voltage sag of vac from 100% to 25% is simulated.

Table. I. System specification and design parameters

| | | | | |
|---|---|---|---|---|
| Line-to-kine grid voltage, $v_{ac}$ ($V_{rms}$) | 690 | Converter-side inductor $L_c$ (uH) | 27 |
| Rated power, $P_o$ (kW) | 25 | Filter capacitor $C_f$ (uF) | 4.5 |
| DC link voltage, $v_{dc}$ (V) | 1200 | Grid-side inductor $L_g$ (uH) | 30 |
| Number of voltage level | 9 | Flying capacitor $C_{FC}$ (uF) | 15 |
| Modulation scheme | CSPWM | Switching frequency $f_{sw}$ (kHz) | 24 |
| Fundamental frequency, $f_1$ (Hz) | 50 | Output pulse frequency $f_{out}$ (kHz) | 96 (= 4×24) |

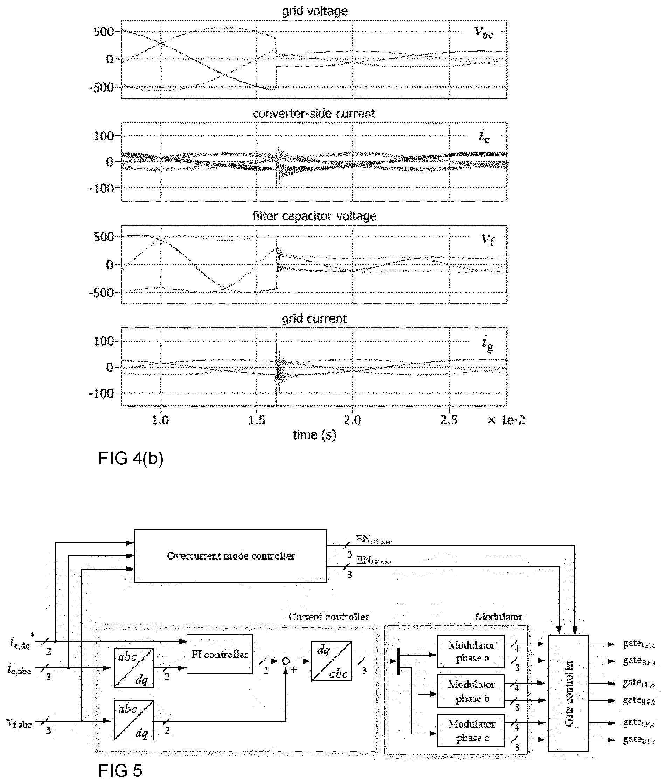

Since the converter output frequency $f_{out}$ is 96 kHz, a sampling frequency $f_{samp}$ of 96 kHz is used initially. In this case, the severe current spike of the converter-side current $i_c$ exceeds 200 A as shown in Figure 4(a), which is higher than 5 times the rated current in the worst case. When a higher $f_{samp}$ of 1 MHz is used, the peak current spike of $i_c$ can be substantially reduced to about 80 A, because of the reduced computation delay of the controller compared

with $f_{samp}$ of 96 kHz. The simulation with higher sampling frequency is shown in Figure 4(b).

As can be observed, higher $f_{samp}$ is beneficial to reduce the transient current spike. However, the maximum available $f_{samp}$ is limited by the control hardware. Moreover, it is difficult to guarantee absolute limitation of peak currents with the conventional current control scheme, which results in additional design margins of the converter.

BRIEF DESCRIPTION OF THE INVENTION

An object of the present invention is thus to provide a converter so as to solve the above problems The object of the invention is achieved by a converter which are characterized by what is stated in the independent claim. The preferred embodiments of the invention are disclosed in the dependent claims.

The invention is based on the idea of minimizing the transient current spikes by introducing an additional peak current controller. The peak current controller actively changes the operation of the converter when overcurrents are detected. The overcurrent mode controller is an addition to a generally used control PI control structure which controls the operation of the converter in a normal situation. The modulation or the controller structure are not affected by the additional overcurrent mode controller.

The advantage of the converter of the present disclosure is that as the overcurrents are effectively blocked, the operation of the converter can be continued after the overcurrent situation which helps in obtaining low voltage ride through functionality for example. Further, as the overcurrents are blocked, the currents cannot cause any damage to the components of the converter.

BRIEF DESCRIPTION OF THE DRAWINGS

In the following the invention will be described in greater detail by means of preferred embodiments with reference to the attached [accompanying] drawings, in which

Figure 1(a) and (b) show known flying capacitor converter topologies;
Figure 2 shows a basic structure of a three-phase grid tied converter with an LCL-filter;
Figure 3 shows a controller structure applicable in connection with the structure of Figure 2;
Figure 4 (a) and (b) show current and voltage waveforms obtained with a structure of Figure 2 during a grid voltage sag;
Figure 5 shows an embodiment of the present invention;
Figure 6 shows an implementation of an overcurrent mode controller;
Figure 7 shows an example of converter current with overcurrent band;
Figures 8 and 9 shows implementations of overcurrent mode controllers.

DETAILED DESCRIPTION OF THE INVENTION

Figure 5 shows the basic implementation of the control structure of an embodiment of the invention. When compared to Figure 3, it is noticed that overcurrent mode controller is an addition to a known control structure.

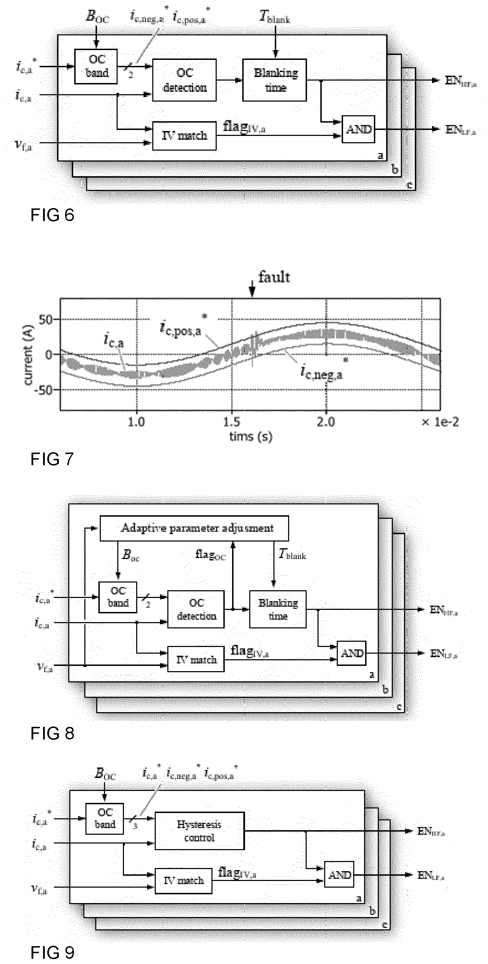

Figure 6 shows an implementation of the overcurrent mode controller. The overcurrent mode controller is implemented per phase as shown in Figure 6. The main idea of overcurrent mode controller is that a peak current controller and the existing PI controller is running in parallel at the same time, where the peak current reference, i.e, overcurrent band, is set to a slightly higher value compared with the maximum steady-state current so that overcurrent mode controller is only triggered during transient operations.

Figure 7 shows the overcurrent band, $i_{c,pos,a}{}^*$ and $i_{c,neg,a}{}^*$ defined in (2) and (3), respectively. It is noted that the positive overcurrent band, $i_{c,pos,a}{}^*$, is active when $i_{c,a}{}^*$ is positive and vice versa for $i_{c,neg,a}{}^*$. That is, only the overcurrent is concerned, not the undercurrent. Therefore, if the converter current is positive and converter current is higher than the overcurrent upper value, the overcurrent mode controller is adapted to block gate control signals. Further, if the converter current is negative and the converter current is lower than the lower limit, the overcurrent mode controller is adapted to block gate control signals.

$$i_{c,pos,a}{}^* = i_{c,a}{}^* + B_{OC} \qquad (2)$$

$$i_{c,neg,a}{}^* = i_{c,a}{}^* - B_{OC} \qquad (3)$$

In order to synchronize with the PI controller again after overcurrent mode controller is triggered, a small blanking time $T_{blank}$ is added as shown in Figure 6. The blanking time is selected such that $i_{c,a}$ comes back to close to $i_{c,a}{}^*$ when the blanking time is over. That is, the required current ramping $\Delta i_{c,a}$ during $T_{blank}$ can be expressed as (4) and (5). Here, $S_{LF}$ is the switching function of LF switches, which is '1' when the upper LF switches are ON or '0' when the lower LF switches are ON. Then, the required $T_{blank}$ can be expressed as (6).

$$i_{c,a}^{*} = i_{c,pos,a}^{*} - \Delta i_{c,a}^{*} \tag{4}$$

$$\Delta i_{c,a} = \frac{\left(0.5 V_{dc} S_{LF} + V_{f,a}\right) T_{blank}}{L_c} \tag{5}$$

$$T_{blank} = \frac{i_{c,pos,a}^{*} - i_{c,a}^{*}}{0.5 V_{dc} S_{LF} + V_{f,a}} \tag{6}$$

In order to ramp down the overcurrent as soon as it is detected, the gate signals are blocked immediately by the Gate controller in Figure 8. Since the inductance of $L_c$ is so small, di/dt becomes very high when all the gate signals are blocked, which makes it difficult to be re-synchronized with the PI controller. Therefore, a two-step gate signal blocking process is preferred. In two-step process when over current is detected, first the HF gate signals, i.e. the gate signals to the switch components with high frequency switching as indicated in Figure 2 are blocked. These are blocked with signal $EN_{HF}$ in Figure 5.

If blocking of the high frequency gate signals is not enough to ramp down the overcurrent, then then also the low frequency gate signals are blocked through $EN_{LF}$ shown in Figure 5.

Activation of $EN_{LF}$ is determined based on the sign of $i_c$ and $v_f$ in the converter. If both sings are the same, blocking of the high frequency gates is enough to generate a converter-side voltage $v_c$ to ramp down the overcurrent. Otherwise, all the gate signals are blocked to produce low-enough $v_c$ to ramp down the overcurrent. The two-step blocking process also helps to minimize the number of switching actions of low frequency switches when overcurrent mode controller is in operation. Figure 6 shows an example of how to produce the blocking of the low frequency gates. The signs of the inputted converter-side voltage and converter current are compared in block IV match. A signal flag$_{IV,a}$ is generated based on the comparison and it is fed to an AND block. The AND block receives also input from the blanking time block. If the output of the blanking time block is high, then the gates or gate signals of high frequency components are blocked. Once the both inputs to the AND block are high, also the gates or gate signals of the low frequency components are blocked.

Thus in the present invention the overcurrent mode controller is adapted to receive a converter current reference and measured converter current as shown in Figure 5. The controller is further adapted to form an overcurrent band having an upper and a lower value as shown in Figure 7. The upper and the lower values are $i_{c,pos,a}^{*}$ and $i_{c,neg,a}^{*}$. The upper value is higher than the converter current reference and the lower value is lower than the converter current reference. Further, the overcurrent mode controller is adapted to block gate control signals when the measured converter current is positive and higher than the upper value or when the measured converter current is negative and lower than the lower value.

According to an embodiment, and as shown in (2) and (3), the upper value of the overcurrent band is formed by adding an overcurrent band value Boc to the converter current reference and the lower value by subtracting the overcurrent band value Boc from the converter current reference

As mentioned above, the overcurrent mode controller is adapted to receive a blanking time $T_{blank}$, and the controller is adapted to block gate control signals for the duration of the blanking time.

Once the overcurrent mode controller is in operation, re-synchronization with the PI controller is highly affected by $T_{blank}$ and $v_f$, which mainly determine the amount of the current ramping. To minimize the transient time of re-synchronization, adaptive parameter adjustment can be added to overcurrent mode controller as shown in Figure 8. According to an embodiment, the blanking time $T_{blank}$ can be adjusted by counting the number of overcurrent mode controller action, i.e., flagoc, in a certain time window. Then $T_{blank}$ can be adjusted to reduce the overcurrent mode controller action. The same number of overcurrent mode controller action can also be used in adjusting the overcurrent band. In Figure 8 it is shown how the adaptive parameter adjustment block affects both the blanking time and the overcurrent band. The overcurrent band is adjusted by changing the value of Boc which determines the width of the band.

According to an embodiment, the overcurrent mode controller comprises a hysteresis band and is adapted to block gate control signals until the measured current has dropped below the hysteresis limit. In order to have better control of overcurrent mode controller, a hysteresis control can be adopted instead of blanking time as shown in Figure 9. In hysteresis control the overcurrent is checked against the overcurrent band as described above. Instead of setting a blanking time during which the gate signals are blocked, in hysteresis control the gate signals are blocked as long as the current is above a certain limit which is dependent on the current reference. It is to be understood, that overcurrent can have positive or negative sign. When overcurrent drops or falls below a hysteresis limit, it's absolute value decreases or it's amplitude decreases towards zero. The use of hysteresis limit is less sensitive to disturbances and parameter variations than the use of blanking time.

It will be obvious to a person skilled in the art that, as the technology advances, the inventive concept can be implemented in various ways. The invention and its embodiments are not limited to the examples described above but may vary within the scope of the claims.

**Claims**

1.  A flying capacitor multilevel converter having active neutral-point-clamped topology with an output LCL-filter, wherein the converter comprises an overcurrent mode controller, which is overcurrent mode controller is adapted

    to receive a converter current reference and measured converter current,
    to form an overcurrent band having an upper and a lower value, the upper value being higher than the converter current reference and the lower value being lower than the converter current reference, and
    to block gate control signals when the measured converter current is positive and higher than the upper value or when the measured converter current is negative and lower than the lower value.

2.  A flying capacitor multilevel converter according to claim 1, wherein the upper value of the overcurrent band is adapted to be formed by adding an overcurrent band value Boc to the converter current reference and the lower value by subtracting the overcurrent band value Boc from the converter current reference.

3.  A flying capacitor multilevel converter according to claim 1 or 2, wherein the overcurrent mode controller is adapted to receive a blanking time, and the controller is adapted to block gate control signals for the duration of the blanking time.

4.  A flying capacitor multilevel converter according to claim 1 or 2, wherein the overcurrent mode controller comprises a hysteresis band and is adapted to block gate control signals until the measured current has dropped below the hysteresis limit.

5.  A flying capacitor multilevel converter according to any one of claims 1 to 4, wherein the flying capacitor multilevel converter comprises switch components which are adapted to be controlled with a low frequency and switch components which are adapted to be controlled with a high frequency according to the active neutral-point-clamped topology, wherein the overcurrent mode controller is adapted to block the gate control signals to the switch components that are adapted to be controlled with a high frequency.

6.  A flying capacitor multilevel converter according to claim 5, wherein the overcurrent mode controller is adapted to block the gate control signals to the switch components that are adapted to be controlled with a low frequency if the signs of the measured converter current and measured filter capacitor voltage are different.

7.  A flying capacitor multilevel converter according to any one of claims 1 to 6, wherein the blanking time and/or the overcurrent band value is adapted to be adjusted based on the number of detected overcurrents in a certain time window.

(a)

(b)

FIG 1

LF switching          HF switching          LCL filter

FIG 2

FIG 3

FIG 4(a)

## grid voltage

## converter-side current

## filter capacitor voltage

## grid current

FIG 4(b)

FIG 5

FIG 6

FIG 7

FIG 8

FIG 9

Europäisches Patentamt

European Patent Office

Office européen des brevets

# EUROPEAN SEARCH REPORT

Application Number

EP 20 15 9794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YANGLE PING ET AL: "A novel adaptive hysteresis band current control method for three-level based active power filter", POWER ELECTRONICS AND MOTION CONTROL CONFERENCE (IPEMC), 2012 7TH INTERNATIONAL, IEEE, 2 June 2012 (2012-06-02), pages 2716-2720, XP032216117, DOI: 10.1109/IPEMC.2012.6259292 ISBN: 978-1-4577-2085-7 * abstract * * equation 3; page 2717; figures 1, 2, 5 * | 1-7 | INV. H02M7/483 H02M7/487 H02M1/32 H02M1/36 ADD. H02M1/00 |
| A | SHUKLA A ET AL: "Improved Multilevel Hysteresis Current Regulation and Capacitor Voltage Balancing Schemes for Flying Capacitor Multilevel Inverter", IEEE TRANSACTIONS ON POWER ELECTRONICS, INSTITUTE OF ELECTRICAL AND ELECTRONICS ENGINEERS, USA, vol. 23, no. 2, 1 March 2008 (2008-03-01), pages 518-529, XP011203751, ISSN: 0885-8993 * figures 2, 3 * | 1-7 | |
| A | EP 3 236 576 A1 (DELTA ELECTRONICS (SHANGHAI) CO LTD [CN]) 25 October 2017 (2017-10-25) * claims 1-3 * | 1-7 | TECHNICAL FIELDS SEARCHED (IPC) H02M |

-/--

The present search report has been drawn up for all claims

| Place of search | Date of completion of the search | Examiner |
|---|---|---|
| The Hague | 27 August 2020 | Zeljkovic, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 20 15 9794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LEMMEN ERIK ET AL: "Sliding mode capacitor voltage control in extended commutation cell based inverter", 2016 IEEE 8TH INTERNATIONAL POWER ELECTRONICS AND MOTION CONTROL CONFERENCE (IPEMC-ECCE ASIA), IEEE, 22 May 2016 (2016-05-22), pages 3770-3776, XP032924885, DOI: 10.1109/IPEMC.2016.7512898 [retrieved on 2016-07-13] * figure 7 * | 1-7 | |
| A | Siew-Chong Tan ET AL: "Sliding Mode Control of Switching Power Converters Techniques and Implementation" In: "Sliding Mode Control of Switching Power Converters Techniques and Implementation", 26 May 2011 (2011-05-26), CRC Press Taylor & Francis Group, XP055462865, ISBN: 978-1-138-07549-8 * pages 81-100 * | 1-7 | |
| A | CA 3 005 583 A1 (UNIV ALBERTA [CA]) 22 November 2019 (2019-11-22) * figures 1, 2A * | 1-7 | TECHNICAL FIELDS SEARCHED (IPC) |

The present search report has been drawn up for all claims

| Place of search | Date of completion of the search | Examiner |
|---|---|---|
| The Hague | 27 August 2020 | Zeljkovic, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 15 9794

This annex lists the patent family members relating to the patent documents cited in  the above-mentioned European search report.
The members are as contained in the European Patent Office EDP file on
The European Patent Office is in no way liable for these particulars which are merely given for the purpose of information.

27-08-2020

| Patent document cited in search report | | Publication date | Patent family member(s) | | Publication date |
|---|---|---|---|---|---|
| EP 3236576 | A1 | 25-10-2017 | CN | 107306083 A | 31-10-2017 |
| | | | EP | 3236576 A1 | 25-10-2017 |
| | | | JP | 6352477 B2 | 04-07-2018 |
| | | | JP | 2017208998 A | 24-11-2017 |
| | | | US | 2017310105 A1 | 26-10-2017 |
| CA 3005583 | A1 | 22-11-2019 | NONE | | |

EPO FORM P0459

For more details about this annex : see Official Journal of the European Patent Office, No. 12/82